# EUROPÄISCHE PATENTSCHRIFT

(11) **EP 3 046 161 B1**
(45) Veröffentlichungstag und Bekanntmachung des Hinweises auf die Patenterteilung: **20.12.2017**
(21) Anmeldenummer: 15150937.9
(22) Anmeldetag: 13.01.2015
(51) Int. Cl.: H01M 2/12

(54) **Druckausgleichsvorrichtung**
Pressure relief device
Dispositif d'équilibrage de pression

(43) Veröffentlichungstag der Anmeldung: 20.07.2016
(73) Patentinhaber: Bimed Teknik Aletler Sanayi ve Ticaret A.S., 34900 Büyükcekmece Istanbul (TR)
(72) Erfinder: Kempf, Klaus, Dr., 70563 Stuttgart (DE)
(74) Vertreter: DREISS Patentanwälte PartG mbB

(56) Entgegenhaltungen:
- EP-A1- 2 554 882
- GB-A- 1 355 831
- JP-A- 2013 168 293

## Beschreibung

Die Erfindung betrifft eine Druckausgleichsvorrichtung zum Ausgleichen eines Innendrucks in einem Gehäuse einer elektrochemischen Vorrichtung, umfassend mindestens eine gaspermeable Membran zum Gasaustausch zwischen einem Innenraum des Gehäuses und einer Umgebung der elektrochemischen Vorrichtung.

Eine solche Vorrichtung dient üblicherweise zum Druckausgleich innerhalb einer Batterie/eines Akkus. Der Innendruck eines geschlossenen Batteriesystems soll dem Außendruck angepasst werden, damit das Batteriegehäuse keinen Schaden nimmt. Der Innendruck kann größer oder kleiner als der Außendruck sein, je nach Einsatzbereich der Batterie (atmosphärischer Druckunterschied bei bewegter Batterie, Druckunterschied durch Temperaturunterschied).

Eine Druckausgleichsvorrichtung ist aus der EP 2 554 882 A1 bekannt. Bei der bekannten Druckausgleichsvorrichtung ist es vorgesehen, dass sich die gaspermeable Membran in Abhängigkeit eines Gehäuseinnendrucks verformt und bei Überschreitung eines Grenzdrucks durch die Spitze eines Notentgasungsstachels zerstört wird.

Eine weitere Druckausgleichsvorrichtung ist aus der JP 2013 168293 A bekannt. Auch bei dieser Druckausgleichsvorrichtung ist es bei Überschreitung eines Grenzdrucks erforderlich, die gaspermeable Membran zu zerstören.

Hiervon ausgehend liegt der vorliegenden Erfindung die Aufgabe zugrunde, eine vereinfachte Druckausgleichsvorrichtung bereitzustellen.

Diese Aufgabe wird bei einer Druckausgleichsvorrichtung mit den Merkmalen des Oberbegriffs des Patentanspruchs 1 erfindungsgemäß durch die kennzeichnenden Merkmale des Patentanspruchs 1 gelöst.

Erfindungsgemäß sind unterschiedliche Membrane vorgesehen, welche voneinander getrennte Funktionen erfüllen. Bei einer ersten Membran handelt es sich um eine gaspermeable Membran, deren Funktion ausschließlich darin besteht, einen Gasaustausch zwischen einem Innenraum und einer Umgebung eines Gehäuses einer elektrochemischen Vorrichtung, insbesondere einer Batterie, zu ermöglichen und dabei gleichzeitig zu verhindern, dass Schmutz, Staub oder Flüssigkeiten in den Innenraum gelangen können. Diese gaspermeable Membran kann im Hinblick auf ihre Gasaustauschfunktion optimiert werden und muss somit nicht im Hinblick auf weitere Kriterien, insbesondere auf eine Verformbarkeit und eine Zerstörbarkeit, optimiert werden.

Eine zweite, von der ersten Membran separate Membran ist in Form einer Berstmembran vorgesehen. Die Funktion dieser zweiten Membran besteht ausschließlich darin, bei einem vorgebbaren Grenzinnendruck zu versagen. Somit muss diese Berstmembran nicht im Hinblick auf eine Gasaustauschfähigkeit optimiert werden; vorzugsweise ist die Berstmembran gas-, wasser- und staubdicht.

Zur Anordnung sowohl der gaspermeablen Membran als auch der hiervon separaten Berstmembran ist ein Membranträger vorgesehen, der die Handhabung der beiden unterschiedlichen Membrane vereinfacht. Die erfindungsgemäße Druckausgleichsvorrichtung umfasst also eine Baueinheit aus einem Membranträger und zwei Membranen mit den o.g. unterschiedlichen Funktionen.

Erfindungsgemäß ist es möglich, im Normalbetrieb einer Batterie hohe Gasaustauschvolumina zu ermöglichen und gleichzeitig für den Fall eines plötzlichen, explosionsartigen Anstiegs des Innendrucks in der Batterie (bspw. bedingt durch die Explosion einer defekten Batteriezelle) eine große Gasmenge Gas innerhalb kürzester Zeit abzuführen und die Gefahr einer Explosion der gesamten Batterie erheblich zu verringern.

Bei einer Ausführungsform der Erfindung ist vorgesehen, dass die Berstmembran und der Membranträger aus demselben Material hergestellt sind. Hierdurch kann eine weiter vereinfachte Druckausgleichsvorrichtung bereitgestellt werden.

Bei einer weiteren Ausführungsform der Erfindung ist vorgesehen, dass die Berstmembran und der Membranträger miteinander einstückig hergestellt sind. Dabei ist es möglich, dass die Berstmembran und der Membranträger aus demselben Material hergestellt sind, oder dass die Berstmembran und der Membranträger aus unterschiedlichen Materialien hergestellt sind. Dementsprechend können der Membranträger und die Berstmembran bei Verwendung desselben Materials in einem Einkomponentenspritzgussverfahren und bei Verwendung von unterschiedlichen Materialien in einem Mehrkomponentenspritzgussverfahren hergestellt werden.

Bevorzugt ist es, dass der Membranträger aus einem Kunststoffmaterial, vorzugsweise aus einem Elastomermaterial, insbesondere aus einem thermoplastischen Elastomer, hergestellt ist. Ein solcher Membranträger lässt sich einfach und preiswert herstellen und ermöglicht es insbesondere bei Verwendung eines elastischen Materials, gleichzeitig eine Dichtfunktion bereitzustellen.

Eine besonders bevorzugte Ausführungsform sieht vor, dass der Membranträger eine zentrale Achse aufweist und dass die Berstmembran quer, insbesondere senkrecht, zu der zentralen Achse orientiert ist. Auf diese Weise kann ein besonders großer Entgasungsquerschnitt beschaffen werden, welcher bei einem Versagen der Berstmembran freigelegt wird.

Erfindungsgemäß ist die gaspermeable Membran zylindrisch und erstreckt sich konzentrisch zu der zentralen Achse des Membranträgers. Auf diese Weise kann eine besonders große Gasaustauschfläche bereitgestellt werden.

Bei einer weiteren Ausführungsform der Erfindung ist ein Gehäuseeinsatz zur Anordnung an einer Durchgangsöffnung des Gehäuses der elektrochemischen Vorrichtung vorgesehen, wobei der Membranträger an oder in dem Gehäuseeinsatz angeordnet ist. Der Gehäuseeinsatz ermöglicht eine mechanisch stabile Verbindung mit dem Gehäuse der elektrochemischen Vorrichtung, insbesondere für den Fall, dass der Membranträger aus einem elastischen Material hergestellt ist. Der Gehäuseeinsatz ist vorzugsweise aus einem Metall, beispielsweise aus Aluminium, hergestellt.

Ferner ist es bevorzugt, wenn der Membranträger mindestens einen Dichtabschnitt zur Abdichtung gegenüber dem Gehäuseeinsatz aufweist. Auf diese Weise kann im Normalbetrieb einer Batterie sichergestellt werden, dass der Gasaustausch über die gaspermeable Membran erfolgt und kein Schmutz, Staub oder Wasser in den Innenraum eindringen kann.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine perspektivische Ansicht einer Ausführungsform einer Druckausgleichsvorrichtung;
- Fig. 2: eine perspektivische Ansicht einer Ausführungsform eines Membranträgers der Druckausgleichsvorrichtung gemäß Fig. 1;
- Fig. 3: eine Draufsicht der Druckausgleichsvorrichtung gemäß Fig. 1; und
- Fig. 4: eine Seitenansicht der Druckausgleichsvorrichtung gemäß Fig. 1 längs einer in Fig. 3 mit IV-IV bezeichneten Schnittlinie und bei Montage an einer elektrochemischen Vorrichtung;

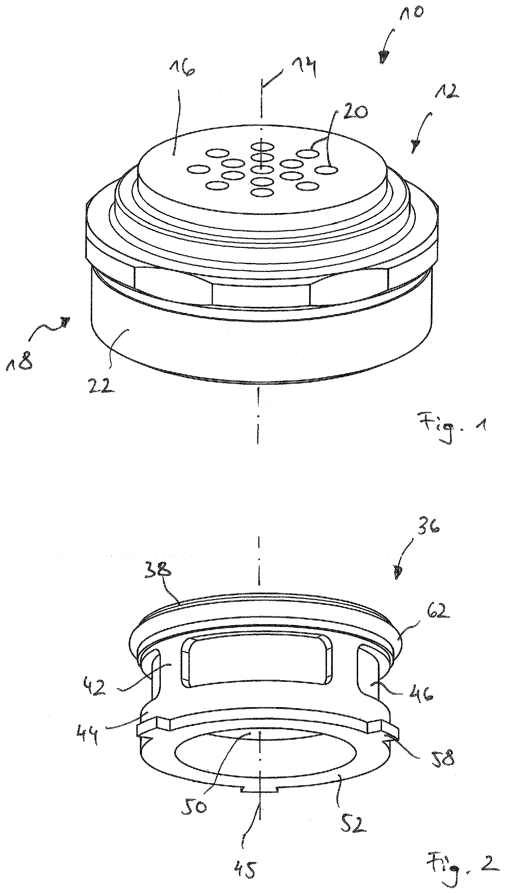

Figur 1 zeigt eine Ausführungsform eines insgesamt mit dem Bezugszeichen 12 bezeichneten Gehäuseeinsatzes. Der Gehäuseeinsatz 12 erstreckt sich längs einer zentralen Achse 14 zwischen einem Deckelabschnitt 16 und einem Montageabschnitt 18.

Der Deckelabschnitt 16 weist mindestens eine, vorzugsweise mehrere Gasdurchtrittsöffnungen 20 auf.

Der Montageabschnitt 18 ist beispielsweise in Form eines Gewindeabschnitts oder Einpressabschnitts 22 oder Einrastabschnitts ausgebildet.

Der Gehäuseeinsatz 12 weist ferner einen sich längs der zentralen Achse 14 erstreckenden Innenraum 24 auf.

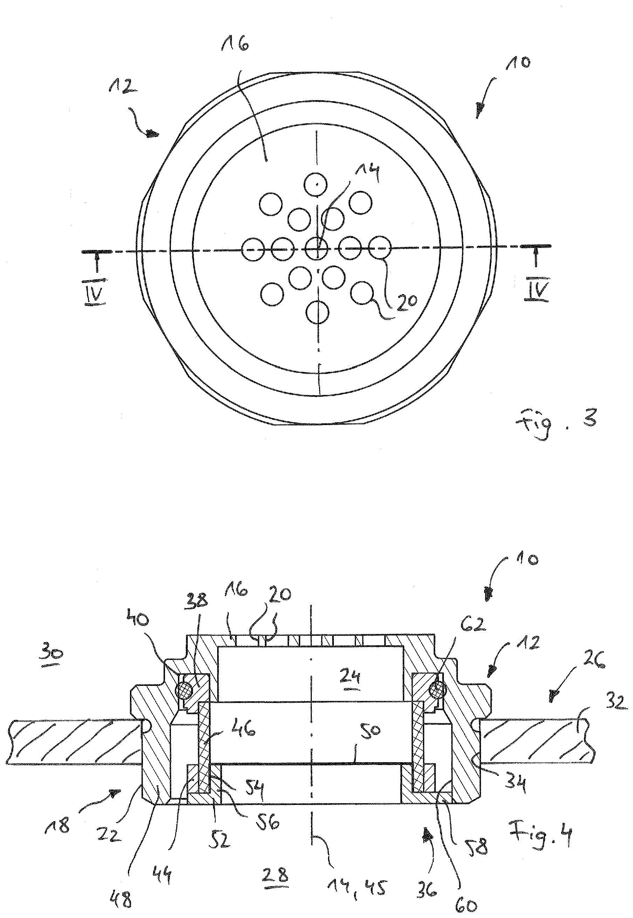

Der Gehäuseeinsatz 12 ist Teil einer insgesamt mit dem Bezugszeichen 10 bezeichneten Druckausgleichsvorrichtung (vergleiche auch Figuren 2, 3 und 4). Die Druckausgleichsvorrichtung 10 dient zum Ausgleichen eines Innendrucks in einem Gehäuse 26 einer elektrochemischen Vorrichtung, insbesondere einer Batterie, deren Innenraum in Figur 4 mit dem Bezugszeichen 28 bezeichnet ist. Die Umgebung des Gehäuses 26 ist mit dem Bezugszeichen 30 bezeichnet.

Das Gehäuse 26 weist eine Gehäusewand 32 mit einer Gehäuseöffnung 34 auf. Der Montageabschnitt 18 des Gehäuseeinsatzes 12 ist mit einer Berandung der Gehäuseöffnung 34 verschraubt, verpresst und/oder verrastet.

Die Druckausgleichsvorrichtung 10 umfasst einen insgesamt mit dem Bezugszeichen 36 bezeichneten und auch in Fig. 2 dargestellten Membranträger, der beispielsweise aus einem elastischen Kunststoffmaterial hergestellt ist. Der Membranträger 36 weist einen ringförmigen Halteabschnitt 38 zur Verbindung mit einer nutförmigen Aufnahme 40 des Gehäuseeinsatzes 12 auf.

Von dem Halteabschnitt 38 ragen in Umfangsrichtung voneinander getrennte Stege 42 ab, welche zur Verbindung des Halteabschnitts 38 mit einem zweiten, ringförmigen Halteabschnitt 44 dienen.

Die Stege 42 erstrecken sich parallel zu einer zentralen Achse 45 des Membranträgers 36. Die zentrale Achse 45 des Membranträgers 36 fluchtet mit der zentralen Achse 14 des Gehäuseeinsatzes 12.

Die entlang der zentralen Achse 45 gesehen zueinander beabstandeten Halteabschnitte 38 und 44 dienen zur Anordnung einer gaspermeablen Membran 46, welche zylindrisch ausgebildet ist und sich um die zentrale Achse 45 des Membranträgers 36 herum erstreckt.

Die gaspermeable Membran 46 ist beispielsweise mittels einer Verklebung mit dem ersten Halteabschnitt 38 verbunden. Alternativ hierzu ist es auch möglich, die Membran 46 im Zuge einer Spritzgussherstellung des Membranträgers 36 zu umspritzen.

Der zweite Halteabschnitt 44 ist zu einer Wandung 48 des Gehäuseeinsatzes 12 beabstandet, sodass zwischen dem Innenraum 28 der Batterie und einer nach radial außen weisenden Membranfläche der gaspermeablen Membran 46 ein Gasaustauschpfad entsteht. Dieser Gasaustauschpfad findet seine Fortsetzung auf der nach radial innen weisenden Fläche der gaspermeablen Membran 46, welche unmittelbar mit dem Innenraum 24 des Gehäuseeinsatzes 12 kommuniziert.

Der zweite Halteabschnitt 44 dient gleichzeitig zur Anordnung einer von der gaspermeablen Membran 46 separaten Berstmembran 50. Die Berstmembran 50 ist vorzugsweise kreisförmig und ist ausschließlich im Hinblick auf ihre Berstfunktion ausgelegt. Beispielsweise kann die Berstmembran 50 so ausgelegt werden, dass ein Überdruck von beispielsweise 0,4 bar im Innenraum 28 der elektrochemischen Vorrichtung dazu führt, dass die Berstmembran 50 reißt oder platzt, sodass augenblicklich eine große, materialfreie Entgasungsfläche geschaffen werden kann.

Die Berstmembran 50 ist beispielsweise einstückig mit dem Membranträger 36 hergestellt.

In dem in der Zeichnung dargestellten Ausführungsbeispiel ist die Berstmembran 50 separat von dem Membranträger 36 bereitgestellt. Zur Fixierung der Berstmembran 50 an dem Membranträger 36 weist der Membranträger 36 ein ringförmiges Fixierelement 52 auf, mittels welchem eine Berandung 54 der Berstmembran 50 zwischen einem nach radial innen weisenden Randabschnitt der gaspermeablen Membran 46 und einem ringförmigen Klemmabschnitt 56 des Fixierelements 52 verbunden, insbesondere verklemmt, ist.

Das Fixierelement 52 trägt entlang seines Umfangs verteilt angeordnete Abstandselemente 58, welche an einer Innenseite 60 der Wandung 48 des Gehäuseeinsatzes 12 anliegen und zu einer mechanisch stabilen Anordnung des Membranträgers 36 in dem Gehäuseeinsatz 12 beitragen.

Der Halteabschnitt 38 des Membranträgers 36 dient gleichzeitig als Verbindungsabschnitt zur Verbindung mit dem Gehäuseeinsatz 12 und auch als Dichtabschnitt zur Abdichtung gegenüber dem Gehäuseeinsatz 12. Zur Verbesserung der Abdichtung kann zusätzlich oder alternativ hierzu auch ein O-Ring 62 vorgesehen sein.

## Patentansprüche

1. Druckausgleichsvorrichtung (10) zum Ausgleichen eines Innendrucks in einem Gehäuse (26) einer elektrochemischen Vorrichtung, umfassend mindestens eine gaspermeable Membran (46) zum Gasaustausch zwischen einem Innenraum (28) des Gehäuses (26) und einer Umgebung (30) der elektrochemischen Vorrichtung, wobei die Druckausgleichsvorrichtung (10) eine von der gaspermeablen Membran (46) separate Berstmembran (50) aufweist, welche bei Überschreitung eines Grenzinnendrucks zur Freigabe eines Gasaustauschquerschnitts versagt, und wobei ein Membranträger (36) zur Anordnung der gaspermeablen Membran (46) und der Berstmembran (50) vorgesehen ist, **dadurch gekennzeichnet, dass** der Membranträger (36) eine zentrale Achse (45) aufweist und dass die gaspermeable Membran (46) zylindrisch ist und sich konzentrisch zu der zentralen Achse (45) erstreckt.

2. Druckausgleichsvorrichtung (10) nach Anspruch 1, **dadurch gekennzeichnet, dass** die Berstmembran (50) und der Membranträger (36) aus demselben Material hergestellt sind.

3. Druckausgleichsvorrichtung (10) nach einem der voranstehenden Ansprüche, **dadurch gekennzeichnet, dass** die Berstmembran (50) und der Membranträger (36) miteinander einstückig hergestellt sind.

4. Druckausgleichsvorrichtung (10) nach einem der voranstehenden Ansprüche, **dadurch gekennzeichnet, dass** der Membranträger (36) aus einem Kunststoffmaterial, vorzugsweise aus einem Elastomermaterial, insbesondere aus einem thermoplastischen Elastomer, hergestellt ist.

5. Druckausgleichsvorrichtung (10) nach einem der voranstehenden Ansprüche, **dadurch gekennzeichnet, dass** der Membranträger (36) eine zentrale Achse (45) aufweist und dass die Berstmembran (50) quer, insbesondere senkrecht, zu der zentralen Achse (45) orientiert ist.

6. Druckausgleichsvorrichtung (10) nach einem der voranstehenden Ansprüche, **dadurch gekennzeichnet, dass** ein Gehäuseeinsatz (12) zur Anordnung an einer Durchgangsöffnung (34) des Gehäuses der elektrochemischen Vorrichtung vorgesehen ist und dass der Membranträger (36) an oder in dem Gehäuseeinsatz (12) angeordnet ist.

7. Druckausgleichsvorrichtung (10) nach Anspruch 6, **dadurch gekennzeichnet, dass** der Membranträger (36) mindestens einen Dichtabschnitt (38) zur Abdichtung gegenüber dem Gehäuseeinsatz (12) aufweist.

## Claims

1. A pressure equalization device (10) for compensating for an internal pressure in a housing (26) of an electrochemical device, including at least one gas-permeable membrane (46) for gas exchange between an inner chamber (28) of the housing (26) and a surrounding area (30) of the electrochemical device, wherein the pressure equalization device (10) has a bursting membrane (50), which is separate from the gas-permeable membrane (46) and which, when an internal limit pressure is exceeded, fails in order to open a gas exchange cross section, and wherein a membrane holder (36) is provided for locating the gas-permeable membrane (46) and the bursting membrane (50), **characterized in that** the membrane holder (36) has a central axis (45), and that the gas-permeable membrane (46) is cylindrical and extends concentrically to the central axis (45).

2. The pressure equalization device (10) of claim 1, **characterized in that** the bursting membrane (50) and the membrane holder (36) are made from the same material.

3. The pressure equalization device (10) of one of the foregoing claims, **characterized in that** the bursting membrane (50) and the membrane holder (36) are made in one piece with one another.

4. The pressure equalization device (10) of one of the foregoing claims, **characterized in that** the membrane holder (36) is made from a plastic material, preferably an elastomer material, in particular a thermoplastic elastomer.

5. The pressure equalization device (10) of one of the foregoing claims, **characterized in that** the membrane holder (36) has a central axis (45), and that the bursting membrane (50) is oriented transversely, in particular perpendicularly, to the central axis (45).

6. The pressure equalization device (10) of one of the foregoing claims, **characterized in that** a housing insert (12) for being located at a through opening (34) of the housing of the electrochemical device is provided, and that the membrane holder (36) is located on or in the housing insert (12).

7. The pressure equalization device (10) of claim 6, **characterized in that** the membrane holder (36) has at least one sealing segment (38) for sealing off from the housing insert (12).

## Revendications

1. Dispositif d'équilibrage de pression (10) pour équilibrer la pression interne dans un boîtier (26) d'un dispositif électrochimique, comprenant au moins une membrane perméable aux gaz (46) pour un échange gazeux entre un intérieur (28) du boîtier (26) et un environnement (30) du dispositif électrochimique, dans lequel le dispositif d'équilibrage de pression (10) présente une membrane de rupture (50) séparée de la membrane perméable aux gaz (46) qui, en cas de dépassement d'une pression interne limite, échoue à libérer une section transversale d'échange gazeux, et dans lequel un support de membrane (36) est prévu pour l'agencement de la membrane perméable aux gaz (46) et de la membrane de rupture (50), **caractérisé en ce que** le support de membrane (36) présente un axe central (45), et **en ce que** la membrane perméable aux gaz (46) est cylindrique et s'étend de manière concentrique par rapport à l'axe central (45).

2. Dispositif d'équilibrage de pression (10) selon la revendication 1, **caractérisé en ce que** la membrane de rupture (50) et le support de membrane (36) sont fabriqués à partir du même matériau.

3. Dispositif d'équilibrage de pression (10) selon l'une quelconque des revendications précédentes, **caractérisé en ce que** la membrane de rupture (50) et le support de membrane (36) sont fabriqués d'une seule pièce l'un avec l'autre.

4. Dispositif d'équilibrage de pression (10) selon l'une quelconque des revendications précédentes, **caractérisé en ce que** le support de membrane (36) est fabriqué en une matière plastique, de préférence en un matériau élastomère, en particulier en un élastomère thermoplastique.

5. Dispositif d'équilibrage de pression (10) selon l'une quelconque des revendications précédentes, **caractérisé en ce que** le support de membrane (36) présente un central axe (45), et **en ce que** la membrane de rupture (50) est orientée transversalement, en particulier perpendiculairement, à l'axe central (45).

6. Dispositif d'équilibrage de pression (10) selon l'une quelconque des revendications précédentes, **caractérisé en ce qu'**un insert de boîtier (12) est prévu, pour un agencement au niveau d'une ouverture traversante (34) du boîtier du dispositif électrochimique, et **en ce que** le support de membrane (36) est agencé au niveau de ou dans l'insert de boîtier (12).

7. Dispositif d'équilibrage de pression (10) selon la revendication 6, **caractérisé en ce que** le support de membrane (36) présente au moins un tronçon d'étanchéité (38) pour un étanchéification vis-à-vis de l'insert de boîtier (12).
